# EUROPÄISCHE PATENTSCHRIFT

(11) **EP 1 454 083 B1**
(45) Veröffentlichungstag und Bekanntmachung des Hinweises auf die Patenterteilung: **12.10.2005**
(21) Anmeldenummer: 02804572.2
(22) Anmeldetag: 13.11.2002
(51) Int. Cl.: F16H 63/20

(54) **SCHALTVORRICHTUNG ZUM SCHALTEN VON WENIGSTENS ZWEI SCHALTBAREN GÄNGEN EINES SCHALTGETRIEBES**
SWITCHING DEVICE FOR SWITCHING AT LEAST TWO SWITCHABLE SPEEDS IN A GEARBOX
DISPOSITIF DE COMMUTATION POUR PASSER AU MOINS DEUX RAPPORTS EMBRAYABLES D'UNE BO TE DE VITESSES

(30) Priorität: 12.12.2001 DE 10160859
(43) Veröffentlichungstag der Anmeldung: 08.09.2004
(73) Patentinhaber: INA-Schaeffler KG, 91074 Herzogenaurach (DE)
(72) Erfinder: TRISSLER, Arnold, 91074 Herzogenaurach (DE); MAIER, Waldemar, 91074 Herzogenaurach (DE); MASSINI, Stanislav, 90419 Nürnberg (DE)
(86) Internationale Anmeldenummer: PCT/EP2002/012648
(87) Internationale Veröffentlichungsnummer: WO 2003/050439

(56) Entgegenhaltungen:
- DE-A- 2 428 265
- DE-A- 4 242 456
- DE-B- 1 157 490
- DE-C- 10 011 272
- US-A- 4 510 819

## Beschreibung

### Gebiet der Erfindung

Die Erfindung betrifft eine Schaltvorrichtung zum Schalten von wenigstens zwei über bewegbare Schaltelemente schaltbaren Gängen eines Schaltgetriebes mit wenigstens einem um eine Schwenkachse schwenkbaren sowie entlang der Schwenkachse verschiebbaren Schaltfinger und die Schaltvorrichtung weiterhin mit wenigstens einem synchron mit dem Schaltfinger um die Schwenkachse schwenkbaren sowie entlang der Schwenkachse verschiebbaren Sperrglied, das wahlweise das Schalten mindestens eines der Gänge an einem Schaltelement sperrt, wobei das Sperrglied das zu sperrende Schaltelement an einem in die zu sperrende Schalteinrichtung weisenden Abschnitt des Schaltelementes zumindest dann angreift, wenn das zu sperrende Schaltelement bestrebt ist, sich in die gesperrte Schaltrichtung zu bewegen, entsprechend dem Oberbegriff des Anspruchs 1 und wie aus der DE 10011272 C bekannt.

### Hintergrund der Erfindung

Eine derartige Schaltvorrichtung ist in DE 31 25 632 beschrieben. Die Schaltvorrichtung ist zum Schalten von fünf Vorwärtsgängen und einem Rückwärtsgang in einem Schaltgetriebe eingesetzt. An einer relativ zum Schaltgetriebe um ihre Schwenkachse schwenkbaren und entlang ihrer Schwenkachse verschiebbaren Schaltwelle sitzt fest und somit mit der Schaltwelle synchron schwenkbar sowie verschiebbar ein Schaltfinger. Auf Schaltelementen in Form von verschiebbaren Schaltstangen sitzen in bekannter Weise Schaltgabeln. Mit den Schaltgabeln sind wahlweise einzelne Gänge zu schalten. Die Schaltstangen weisen im Grund eines gabelartig ausgebildeten Schaltmaules Ausnehmungen auf, in die der Schaltfinger zum Wählen einer Gasse eingreifen kann. Dazu stehen die Ausnehmungen in einer Neutralstellung in Verschieberichtung entlang der Schwenkachse der Schaltwelle gesehen hintereinander in einer Linie ausgerichtet. Durch ein Verschieben der Schaltwelle entlang ihrer Schwenkachse fährt der Schaltfinger in eine der Ausnehmungen ein und eine der Schaltgassen ist somit gewählt. Je nach Stellung der Schaltwelle muss der Schaltfinger dabei eine weitere der Ausnehmungen in Verschieberichtung durchfahren.

Durch Schwenken der Schaltwelle nach DE 31 25 632 mit dem in einer Ausnehmung stehenden Schaltfinger ist wahlweise einer der zwei der gewählten Gasse zugeordneten Gänge schaltbar. Der mit der geschwenkten Schaltwelle schwenkende Schaltfinger wirkt dazu auf die eine oder die andere Seite der Wandung in der Ausnehmung und verschiebt so die Schaltstange mit der Schaltgabel zum Schalten eines der zwei mit dem Schaltelement schaltbaren Gänge.

Am Schaltfinger nach DE 31 25 632 C1 stehen zwei Sperrglieder in Form von Sperrnocken von dem Schaltfinger bzw. der Schaltwelle radial ab. Diese Sperrglieder erstrecken sich beiderseits in Verschieberichtung entlang der Schwenkachse der Schaltwelle von dem Schaltfinger aus an der Schaltwelle entlang. Die Sperrnocken fixieren einerseits ein jedes der Schaltelemente in der Neutralstellung und sperren andererseits bei unexakter Vorwahl die Schaltvorrichtung gegen das Schalten von Gängen sowie lassen nur das Schalten von einem Gang gleichzeitig zu. Dazu wirkt die in Umfangsrichtung der Schaltwelle kreissymmetrisch verlaufende Außenkontur der Sperrnocken mit der daran entsprechend gekrümmt angepassten Innenkontur des Schaltmaules so zusammen, dass die Sperrnocken zwar in den Schaltmäulern relativ zu dem Schaltelement schwenkbar sind, aber ein Verschieben des Schaltelementes zum Schalten der Gänge durch den Schaltfinger nicht möglich ist, wenn einer der Sperrnocken in einem Schaltmaul steht. Damit der Schaltfinger in der gewählten Gasse das Schaltelement trotzdem bewegen kann, ist in den Spermocken eine Schlitzführung eingefräst. Die Schlitzführung liegt in einer gemeinsamen Schwenkebene mit dem Schaltfinger. Der Schlitz der Schlitzführung erstreckt sich radial in den Sperrnocken in Richtung Schaltwelle hinein und ist in Verschieberichtung der Schaltwelle geringfügig breiter ausgeführt als die Breite des Schaltmaules in Verschieberichtung der Schaltwelle betrachtet. Ein Schalten eines Ganges in der gewählten Gasse ist nur nach exakter Vorwahl der Gasse möglich, d. h., wenn die Schlitzführung und die Wandung des Schaltmaules exakt zueinander in der Schwenkebene des Schaltfingers ausgerichtet sind. Der schwenkende Schaltfinger verschiebt dabei die Schaltstange, indem er gegen die betreffende Wandung der Ausnehmung in dem Schaltmaul läuft. Je nach Schwenkrichtung des Schaltfingers taucht dann einer der das Schaltmaul begrenzende Wandabschnitte in die Schlitzführung ein und der Gang lässt sich einlegen.

Die in DE 31 25 632 C1 beschriebene Schalt- und Sperrvorrichtung ist für Anwendungen geeignet, in denen einzelne Schaltelemente an Schaltgabeln, wie Schaltmäuler, mit ihren Öffnungen exakt in Verschieberichtung der Schaltwelle entlang ihrer Schwenkachse hintereinander angeordnet und ausgerichtet sind. Eine derartig gestaltete Vorrichtung lässt sich nur in Anwendungen einsetzen, in denen die Schaltmäuler in Verschieberichtung der Schaltwelle hintereinander angeordnet und zueinander in der Neutralstellung ausgerichtet sind. Des weiteren ist die Herstellung eines derartig mit Sperrnocken versehenen Schaltfingers in der Regel mit zeit- und kostenaufwändiger spanabhebender Bearbeitung verbunden. Das betrifft insbesondere das Einarbeiten der Schlitzführung. Der Schaltfinger und auch die Sperrnocken sind relativ massiv ausgebildete Teile, die das Gesamtgewicht des Fahrzeuggetriebes nachteilig beeinflussen. Häufig ist auch der durch eine derartige Vorrichtung beanspruchte Bauraum relativ groß.

### Zusammenfassung der Erfindung

Die Aufgabe der Erfindung ist es daher, eine Schaltvorrichtung mit vielseitig einsetzbaren und materialsparend sowie kostengünstig herstellbaren Sperrgliedern zu schaffen.

Diese Aufgabe ist nach dem Gegenstand des kennzeichnenden Teils des Anspruchs 1 gelöst.

Die Wähl- und Schaltbewegungen zum Wählen der Gassen und Schalten der einzelnen Gassen zugeordneten Gänge sind in Schaltgetrieben mittels eines oder mehrerer Betätigungselemente auf die Schaltelemente übertragen. Die Ausführung der Betätigungselemente ist abhängig von der Gestaltung des Schaltgetriebes. Es sind beispielsweise Schaltwellen, Schalttrommeln oder weitere relativ zum Schaltgetriebe schwenk- bzw. drehbare und zumeist entlang der Schwenkachse verschiebbare Elemente eingesetzt. Unter Betätigungselementen sind also alle die Elemente zu verstehen, die mit einem oder mehreren Schaltfingern, Schaltnocken oder funktionsgleichen Schaltgliedern versehen sind und mit diesen Schaltgliedern auf Schaltelemente, wie Schaltgabeln, Schaltschienen mit einer oder mehreren Schaltgabeln, Schaltstangen oder ähnliche einwirken, um Gänge zu wählen und/oder zu schalten.

Das Schalten eines der Gänge des Schaltgetriebes ist in der betrachteten Schaltvorrichtung mit der Wahl der Gasse eingeleitet. In der Gasse sind ein oder wahlweise zwei Gänge schaltbar. Das Wählen der Gasse ist in der Schaltvorrichtung gemäß Erfindung bevorzugt mit einem Verschieben des Betätigungselementes entlang seiner Schwenkachse eingeleitet. Dabei wird ein Schaltfinger durch Verschieben in eine Ausgangsstellung gebracht, aus der dann durch ein wahlweises Schwenken des Betätigungselementes in die eine oder andere Schwenkrichtung der eine oder andere der gewählten Gasse zugeordneten Gänge schaltbar ist. Der Schaltfinger steht in der gewählten Gasse in einer formschlüssigen Verbindung mit einem oder zwei Schaltelementen, die dann in der Regel längsbewegbar auf eine Kupplung mit einer Synchronisiereinrichtung einwirken. Die formschlüssige Verbindung ist z. B. hergestellt, indem der Schaltfinger in ein Schaltmaul eingreift. Das Schaltmaul ist je nach Ausführung der Schaltvorrichtung an einem Schaltarm ausgebildet, der entweder direkt mit einer Schaltgabel verbunden ist oder der an eine mit einer Schaltgabel versehene Schaltschiene angreift. Das Schaltmaul kann auch direkt an der Schaltgabel oder der Schaltschiene ausgebildet sein. Die Schaltgabel betätigt beispielsweise eine Schaltmuffe der Kupplung.

Die Schaltvorrichtung ist auch in Anwendungen einsetzbar, bei denen das Betätigungselement zum Wählen der Gasse zuerst geschwenkt und dann zum Schalten des Ganges entlang seiner Schwenkachse verschoben wird. Ebenso ist der Einsatz der Schaltvorrichtung in Schaltgetrieben denkbar, in denen das Schaltelement zum Schalten eines Ganges geschwenkt werden muss.

Die Aufgabe der Bügel und/oder anderer Sperrglieder ist es, die Schaltelemente und damit die Gänge in ungeschalteter Neutralstellung zu fixieren und die Schaltvorrichtung bzw. die Gänge bei unexakter Schaltführung und gegen unbeabsichtigtes Einlegen eines Ganges zu sperren. In Schaltgetrieben sind in der Regel vier bis fünf Gänge gleichzeitig zu sperren, um das Schalten eines weiteren Ganges zu ermöglichen. Deshalb sind vorzugsweise mehrere der Sperrglieder gemäß der Erfindung in einem Schaltgetriebe eingesetzt. Jeder der Bügel sperrt dabei einen oder zwei Gänge. Ein oder mehrere gleichzeitig wirkende Sperrglieder lassen wahlweise höchstens das Schalten eines der Gänge in dem Schaltgetriebe zu. Der oder die Bügel sind dabei unabhängig von der Lage des oder der Schaltfinger an der Schaltwelle oder ähnlichem angeordnet.

Die das Sperrglied oder die Sperrglieder in die Sperrposition fahrenden Bewegungen der Schaltwelle dienen ursächlich zum Wählen einer der gewollt zu wählenden Gasse. Da das Sperrglied oder die Sperrglieder synchron mit dem Schaltfinger verschiebbar und schwenkbar an einem Betätigungselement der Schaltvorrichtung befestigt sind, sperrt die Wählbewegung zur Wahl der Gasse somit auch gleichzeitig die zu sperrenden Gänge. Ist ein beabsichtigter Wählvorgang abgeschlossen, steht oder stehen die Sperrglieder in Sperrstellung und die zu sperrenden Gänge sind bei dem sich an den Wählvorgang anschließenden Schaltvorgang durch das Schwenken der Schaltwelle gegen Fehlschaltungen gesperrt.

Mit dem Verschieben des Betätigungselementes, beispielsweise einer Schaltwelle, wird der Bügel in eine Sperrstellung zu dem zu sperrenden Schaltelement gebracht. Der Bügel ist dazu mittels der Schaltwelle in eine Stellung bewegt, bei der er mindestens einem die Oberfläche des Schaltelementes begrenzenden sowie in die zu sperrende Schaltrichtung weisenden Abschnitt oder aber zumindest einem in die Schaltrichtung weisenden Punkt des Abschnittes an einem Sperrelement gegenüberliegt bzw. schon an diesem angreift. Zumindest liegt der Bügel dann an diesem Abschnitt oder Punkt an, wenn das zu sperrende Schaltelement ungewollt in die gesperrte Schaltrichtung bewegt werden sollte. Eine ungewollte Bewegung des Schaltelementes in Schaltrichtung ist verhindert, da der Bügel einer Bewegung des Schaltelementes in dieser Richtung im Wege steht. In der Sperrstellung liegt der Bügel oder zumindest ein Teil des Bügels dem Schaltelement in der Schaltrichtung so gegenüber, oder liegt an diesem so an, dass ein Schwenken oder Verschieben eines Schaltelementes in die zu sperrende(n) Schaltrichtung(en) zum Einlegen des gesperrten Ganges nicht möglich ist. Das zu sperrende Schaltelement fährt mit dem Sperrelement unweigerlich gegen den in Schaltrichtung bewegungsfesten Bügel oder greift schon in Richtung der ungewollten Schaltbewegung an dem Sperrglied an.

Ungewollte Bewegungen des Schaltelementes entstehen z. B. durch ein Zusammenwirken der Schwerkraft mit Kräften infolge Erschütterungen an einem in der Schaltvorrichtung vertikal zu schaltenden Schaltelement oder durch im Fahrbetrieb auftretende Kräfte infolge Beschleunigungen an einem in der Schaltvorrichtung horizontal ausgerichteten Schaltelement. Unter ungewollten Bewegungen sind auch Fehlschaltungen bei nicht exakt zu einem Schaltelement ausgerichtetem Schaltglied zu verstehen.

Der in die Schaltrichtung weisende Abschnitt ist an dem Schaltelement z. B. an den ein Schaltmaul begrenzenden inneren Flanken ausgebildet. Alternativ dazu steht an dem Schaltelement ein Absatz, Sperrnocken oder ein ähnliches funktionsgleiches Sperrelement hervor, das von dem Schaltelement ausgeht und in Sperrstellung an dem Bügel anliegt. Die Schaltwelle muss deshalb zu dem Sperrelement der zu sperrenden Schaltelemente so stehen, dass der jeweilige oder die jeweiligen Bügel mittels Bewegungen der Schaltwelle zumindest in den in der zu sperrenden Schaltrichtung gelegenen Bewegungsraum des Abschnittes oder der Abschnitte an dem jeweiligen Sperrelement eintaucht bzw. eintauchen. Beim Wählen der Gasse muss der oder müssen die Bügel deshalb entlang der Schwenkachse in Richtung des zu sperrenden Schaltelementes so verschoben werden, dass zumindest der sperrende Teil des Bügels eine durch den/die Abschnitt(e) oder den/die Punkt(e) des/der Abschnitte(s) gelegte und in Schaltrichtung verlaufende sowie den Bewegungsraum begrenzende Ebene wenigstens teilweise durchstoßen. Die Schwenkachse oder zumindest die gedachte Verlängerung der Schwenkachse des Betätigungselementes durchbohrt somit ebenfalls diese Ebene, da der Bügel mittels des Betätigungselementes entlang der Schwenkachse des Betätigungselementes verschoben wird. Der Winkel, mit dem die Schwenkachse und die Ebene zueinander ausgerichtete sind, ist in Abhängigkeit der Ausführung der Schaltvorrichtung ein Winkel zwischen größer 0 und kleiner 180°. Bevorzugt steht die Schwenkachse jedoch senkrecht zu der Ebene.

Nach dem Wählen eines der Gassen und dem Sperren der anderen der Gänge des Schaltgetriebes werden die Schaltwelle oder ähnliche Betätigungselemente zum Schalten eines der Gänge noch geschwenkt. Das Schaltelement ist deshalb an dem Sperrelement zumindest so gestaltet, dass dem Bügel oder zumindest dem angreifenden Teil des Bügels während des Schaltprozesses ausreichend Bewegungsraum für ein ungehindertes Schwenken in die eine oder andere Schwenkrichtung zur Verfügung steht. Die Schaltwelle ist somit nicht am Schwenken gehindert. Gleichzeitig erfüllt der Bügel in jeder Schwenkstellung des durchfahrenen Schwenkbereiches seine Sperrfunktion. Der Abschnitt an dem Schaltelement ist dazu so gestaltet, dass der schwenkende Bügel innerhalb des Schwenkbereiches immer einem in die zu sperrende Schaltrichtung gewandten Flächenabschnitt oder Punkt an dem Sperrelement gegenüberliegt bzw. an diesem anliegt und eine Bewegung des Schaltelementes in die gesperrte Schaltrichtung nicht zulässt. Der sperrende Teil des Bügels fährt bei schwenkender Schaltwelle immer ungehindert an einer in die gesperrte Schaltrichtung weisenden Fläche oder Körperkante des Sperrelementes entlang.

Eine Schaltvorrichtung mit den Merkmalen der Erfindung ist einfach und kostengünstig herzustellen. Der Anordnung der Bügel sind nahezu keine Grenzen gesetzt. So sieht eine Ausgestaltung der Erfindung vor, dass die Schwenkachse dem Schaltelement bzw. dem Sperrelement an einer von der zu sperrenden Schaltrichtung abgewandten Seite gegenüberliegt. Weiter ausgestaltet ist die zuletzt genannte Anordnung dadurch, dass das Sperrglied ein das Schaltelement bzw. Sperrelement von einer der zu sperrenden Schalteinrichtung abgewandten Seite des Sperrelementes zumindest teilweise übergreifender sowie den Abschnitt in Schaltrichtung wenigstens teilweise hintergreifender und in die Schaltrichtung unbeweglicher Übergriff ist. Bevorzugt ist für die letztgenannte Ausgestaltung vorgesehen, dass das Sperrglied ein das Schaltelement an dem Sperrelement zumindest teilweise übergreifender sowie den Abschnitt wenigstens teilweise in die Schaltrichtung hintergreifender Schenkel eines zweischenkeligen Bügels ist. Ein derartiger Übergriff ist z. B. durch einen Bügel gebildet, der das Sperrelement von einer Seite aus umfasst oder übergreift, die in eine zur sperrenden Schaltrichtung entgegengesetzte Richtung weist. Zumindest ein Teil des Bügels hintergreift das in die Sperrrichtung weisende Sperrelement an dem Abschnitt von dieser Seite aus. Der Bügel ist dabei an dem Betätigungselement befestigt, das der gesperrten Schaltrichtung abgewandten Seite gegenüberliegt.

Vorzugsweise sind die Bügel z. B. zweischenkelig U-, V-, hufeisen, L- oder hakenförmig gestaltet. Ein Schenkel des Bügels ist an dem Betätigungselement befestigt und der andere Schenkel hintergreift das Schaltelement an dem Sperrelement. Wenn der sperrende Teil des Schenkels aus dem Sperrbereich herausbewegt ist, kann das Schaltelement sich frei in die nun freie Schaltrichtung bewegen.

Eine weitere Ausgestaltung der Erfindung sieht für die Anordnung des Bügels vor, dass die Schwenkachse dem Abschnitt an dem Sperrelement in der gesperrten Schaltrichtung gegenüberliegt. Die Schwenkachse des Betätigungselementes liegt dem in die gesperrte Schaltrichtung weisenden Abschnitt so gegenüber, dass zumindest ein Teil des Bügels in seiner Sperrstellung zwischen dem Betätigungselement und dem Abschnitt angeordnet ist. Der Bügel ist dabei wieder an dem Betätigungselement befestigt. Wenn der sperrende Teil des Schenkels aus dem Sperrbereich herausbewegt ist, kann das Schaltelement sich frei in die nun freie Schaltrichtung bewegen. Dabei bewegt sich das Schaltelement bzw. Sperrelement entweder auf das Betätigungselement oder auf die gedachte Verlängerung der Schwenkachse des Betätigungselementes zu. Das Betätigungselement behindert jedoch die Schaltbewegung nicht, da das Schaltelement die Schaltstellung erreicht hat, ehe das Sperrelement auf das Betätigungselement trifft. Der Bügel an diesem Betätigungselement ist vorzugsweise wieder zweischenkelig ausgebildet, wobei der Bügel mit den freien Enden seiner Schenkel zur Schwenkachse weist. Mit einem von der Schwenkachse weggewandten Teilabschnitt einer parallel zur Schwenkachse verlaufenden Verbindung seiner Schenkel greift dann der Bügel zumindest teilweise an dem Abschnitt des Sperrelementes an.

Das Betätigungselement ist vorzugsweise eine Schaltwelle, wobei die Längsmittelachse der Schaltwelle die Schwenkachse ist. Der Bügel ist um die Längsmittelachse schwenkbar an der Schaltwelle befestigt.

Mit einer weiteren Ausgestaltung der Erfindung ist vorgesehen, dass das Schaltelement eine Schaltgabel für das Schalten zumindest eines Ganges ist.

Die Schaltgabel ist bevorzugt mit einem Schaltmaul versehen, das entweder an einem Schaltarm oder direkt an einem ausreichend dimensionierten Körper der Schaltgabel ausgebildet ist. Eine weitere Alternative ist mit einem Schaltmaul geschaffen, das einer Schaltschiene zugeordnet ist. Das Schaltmaul ist für diese Variante alternativ wiederum an einem Schaltarm oder direkt aus der Schaltschiene ausgearbeitet. In das Schaltmaul greift in bekannter Weise der Schaltfinger oder ein ähnlich gestaltetes Schaltglied ein. Der Bügel greift alternativ in das Schaltmaul direkt ein, oder an einem das Schaltmaul begrenzenden Vorsprung bzw. wie anfangs beschrieben, an weiteren Sperrelementen, wie Sperrnocken oder ähnlichem an.

Die Erfindung sieht in einer Ausgestaltung für eine Schaltvorrichtung mit wenigstens einem zum wahlweisen Schalten von zwei Gängen in zwei Schaltrichtungen bewegbaren Schaltelement vor, dass das in zwei Schaltrichtungen bewegbare Schaltelement mittels des Sperrgliedes in beide Schaltrichtungen unbeweglich sperrbar ist. Das Sperrglied ist dabei ein das Schaltelement zumindest teilweise übergreifender sowie den jeweiligen in Schaltrichtung weisenden Abschnitt des Sperrelementes mit jeweils einem Schenkel wenigstens teilweise in Schaltrichtung hintergreifender zweischenkeliger Bügel. Ein derartiges Schaltelement ist wahlweise in die eine oder andere Schaltrichtung bewegbar in der Vorrichtung angeordnet. Mit dem Bügel sind gleichzeitig beide Gänge in einer Gasse sperrbar. Der gewollt zu schaltende Gang ist in diesem Fall in dem Schaltgetriebe aus einer anderen Gasse zu schalten. Für den in die eine Schaltrichtung sperrbaren Gang der gesperrten Gasse liegt die Schwenkachse des Betätigungselementes einer von der zu sperrenden Schaltrichtung abgewandeten Seite des Sperrelementes gegenüber. Für den anderen in die andere Richtung sperrbaren Gang liegt die Schwenkachse des Betätigungselementes dem Abschnitt in der zu sperrenden Schaltrichtung gegenüber. Die dem Schaltelement zugeordneten Gänge sind gesperrt, wenn in der Schaltvorrichtung ein anderes Schaltelement zum Schalten eines weiteren der Gänge aus einer anderen Gasse des Schaltgetriebes betätigt ist. Wenn das betrachtete Schaltelement von dem Sperrbügel zum Schalten eines seiner zugeordneten Gänge frei ist, kann das Schaltelement mittels eines Schaltfingers wahlweise in die eine oder andere nun freie Schaltrichtung bewegt werden. Das Sperren des anderen Ganges in der diesem Schaltelement zugeordneten Gasse erübrigt sich in diesem Falle, da das Schaltelement in die andere Schaltrichtung geführt ist.

Schließlich sieht eine weitere Ausgestaltung der Erfindung eine Kombination der bisher betrachteten Anordnungen des Betätigungselementes zu den gesperrten Schaltelementen vor. Dabei ist für eine Schaltvorrichtung mit wenigsten einem zum wahlweisen Schalten von zwei Gängen in zwei Schaltrichtungen bewegbaren ersten Schaltelement sowie einem weiteren zweiten Schaltelement zum Schalten wenigstens eines dritten Ganges vorgesehen, dass erste Sperrglied ist ein das Schaltelement zumindest teilweise übergreifender sowie den in die jeweilige Schaltrichtung weisenden Abschnitt mit jeweils einem Schenkel wenigstens teilweise in Schaltrichtung hintergreifender zweischenkeliger Bügel ist. Für den in die eine Schaltrichtung sperrbaren Gang liegt die Schwenkachse des Betätigungselementes einer von der zu sperrenden Schaltrichtung abgewandten Seite des Sperrelementes gegenüber. Für den anderen in die andere Schaltrichtung sperrbaren Gang liegt die Schwenkachse dem Abschnitt in der zu sperrenden Schalteinrichtung gegenüber. Weiterhin ist das in wenigstens eine Schaltrichtung bewegbare zweite Schaltelement mittels eines zweiten Sperrgliedes in eine Schaltrichtung unbeweglich sperrbar. Die Schwenkachse des Betätigungsgliedes liegt in diesem Fall dem Abschnitt an einem weiteren Sperrelement in der zu sperrenden Schaltrichtung gegenüber. Diese zweite Sperrglied ist ein zweischenkelig ausgebildeter Bügel. Mit den freien Enden seiner Schenkel weist der Bügel zur Schwenkachse und ist mit diesen Schenkeln an einem Betätigungsglied, z. B. einer Schaltwelle, befestigt. Mit seiner von der Schwenkachse weggewandten Seite einer Verbindung seiner Schenkel liegt der Bügel an dem in die gesperrte Schaltrichtung weisenden Abschnitt des zweiten Schaltelementes an. Das Betätigungselement ist vorzugsweise eine Schaltwelle, deren Längsmittelachse die Schwenkachse ist. Die Bügel sind wiederum um die Längsmittelachse schwenkbar an der Schaltwelle befestigt.

Die Bügel der vorgeschriebenen Ausführung sind vorzugsweise Stanzteile aus Stahl. Derartige Stanzteile lassen sich auf die einfachste Weise kostengünstig und materialsparend herstellen. Sie weisen ein geringes Gewicht auf. Derartige Bügel sind beliebig an dem Betätigungselement, z. B. einer Schaltwelle, befestigt und angeordnet. Die Bügel sind vorzugsweise mit einer Nabe versehen, die auf der Schaltwelle sitzt. Der Bügel ist mit der Nabe verschweißt. Die Bügel sind unabhängig von der Lage des Schaltfingers vorteilhaft angeordnet. Es ist auch denkbar verschiedene Ausführungen der erfindungsgemäßen Bügel an einer Schaltwelle anzuordnen.

### Kurze Beschreibung der Zeichnungen

Die Erfindung wird nachfolgend anhand eines Ausführungsbeispiels näher erläutert. Die Figuren 1 bis 4 zeigen ein Ausführungsbeispiel einer Schaltvorrichtung gemäß Erfindung, mit der drei Gänge schaltbar sind, in verschiedenen Wähl- und Schalt- bzw. Sperrpositionen. Es zeigen im Einzelnen:
- Figur 1: eine Gesamtansicht der Schaltvorrichtung mit Schaltgabeln, durch die ein Rückwärtsgang und aus einer Gasse wahlweise ein fünfter oder sechster Gang schaltbar sind,
- Figur 2a: die Schaltvorrichtung ohne Schaltgabel mit einem Schaltfinger in einer Neutralstellung sowie mit gleichzeitig gesperrten Gängen,
- Figur 2b: eine gedrehte Ansicht der Vorrichtung nach Figur 2a,
- Figur 3a: die Schaltvorrichtung ohne Schaltgabel in einer Schaltstellung, in der der Rückwärtsgang geschaltet und die Gasse für den fünften und sechsten Gang gesperrt ist,
- Figur 3b: eine gedrehte Ansicht der Schaltvorrichtung nach Figur 3a,
- Figur 4a: die Schaltvorrichtung ohne Schaftgabeln in einer Stellung, in der die Gasse für den fünften und sechsten Gang gewählt sowie der Rückwärtsgang gesperrt ist,
- Figur 4b: die Schaltvorrichtung ohne Schaltgabeln in einer Stellung, in der der fünfte Gang geschaltet und der Rückwärtsgang gesperrt ist und
- Figur 4c: die Schaltvorrichtung in einer Stellung, in der der sechste Gang geschaltet und der Rückwärtsgang gesperrt ist.

### Ausführliche Beschreibung der Zeichnungen

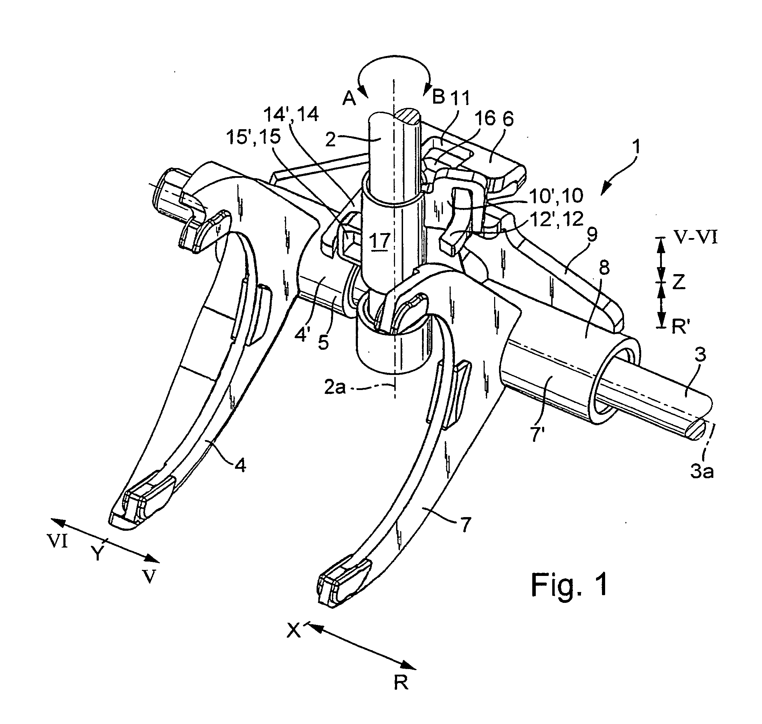

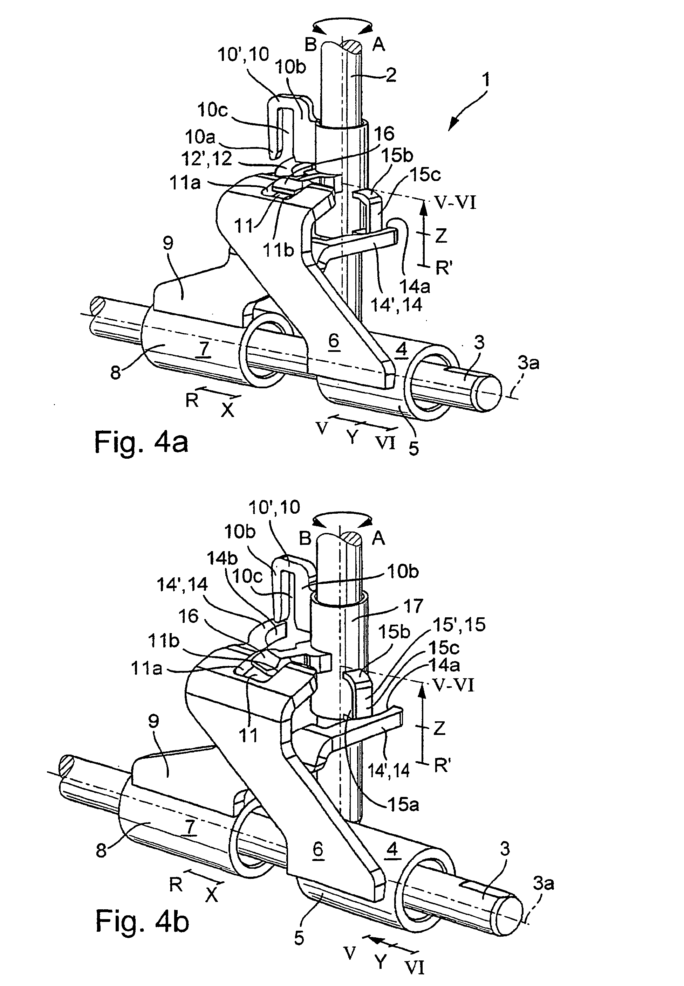

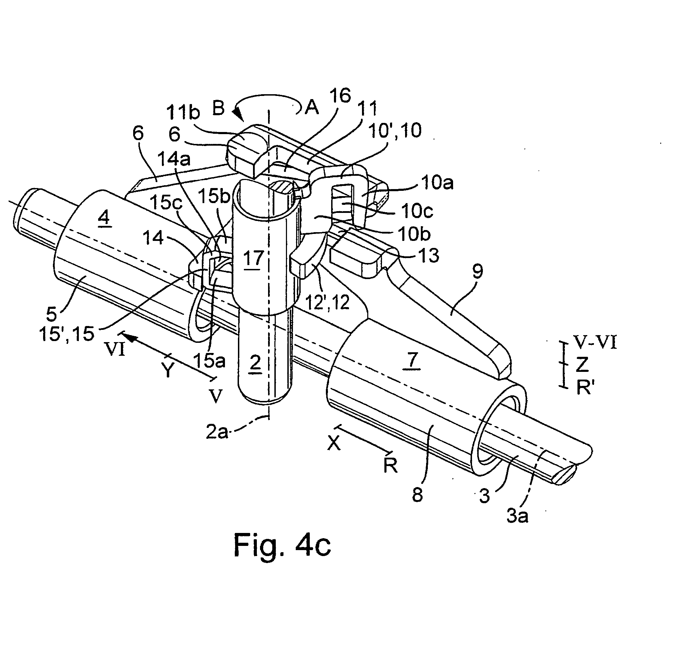

Ein Ausführungsbeispiel der Erfindung zeigen die Figuren 1 und 4. Eine Schaltvorrichtung 1 ist zum Schalten von sechs Gängen vorgesehen. In der Darstellung nach Figur 1 ist die Schaltvorrichtung 1 zum Schalten eines fünften und sechsten Ganges sowie eines Rückwärtsganges dargestellt. Die Schaltvorrichtung 1 besteht aus einer nur teilweise abgebildeten Schaltwelle 2, einer Schaltschiene 3 und zwei Schaltelementen 4' und 7' mit Schaltgabeln 4 bzw. 7. Die Schaltwelle 2 ist entlang ihrer Schwenkachse 2a in Pfeilrichtung wahlweise in die Gasse V-VI in die Position Z sowie in die Position R' verschiebbar in der Schaltvorrichtung 1 angeordnet. Das Schaltelement 4' ist wahlweise in Pfeilrichtung entlang der Längsachse 3a der Schaltschiene 3 in die Schaltstellung V oder VI verschiebbar auf der Schaltschiene 3 angeordnet. Außer der Schaltgabel 4 weist das Schaltelement 4' eine Schiebehülse 5 und einen Schaltarm 6 auf. An der Schiebehülse 5 sind die Schaltgabel 4 und der Schaltarm 6 befestigt. Die Schiebehülse 5 ist verschiebbar auf der Schaltschiene 3 gelagert.

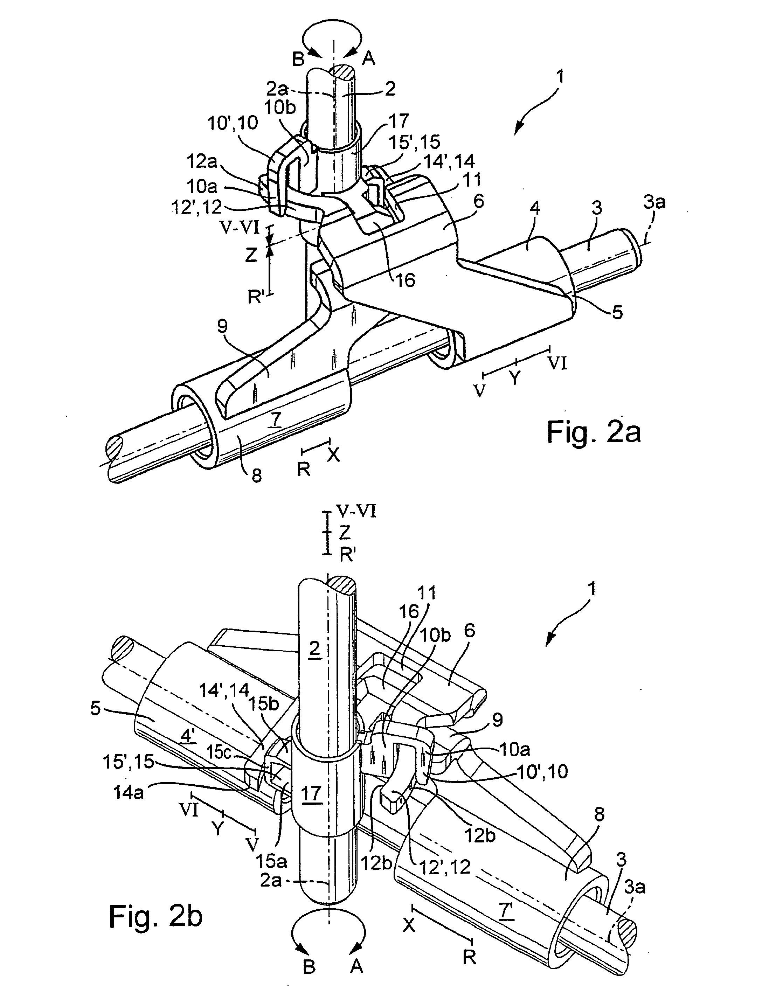

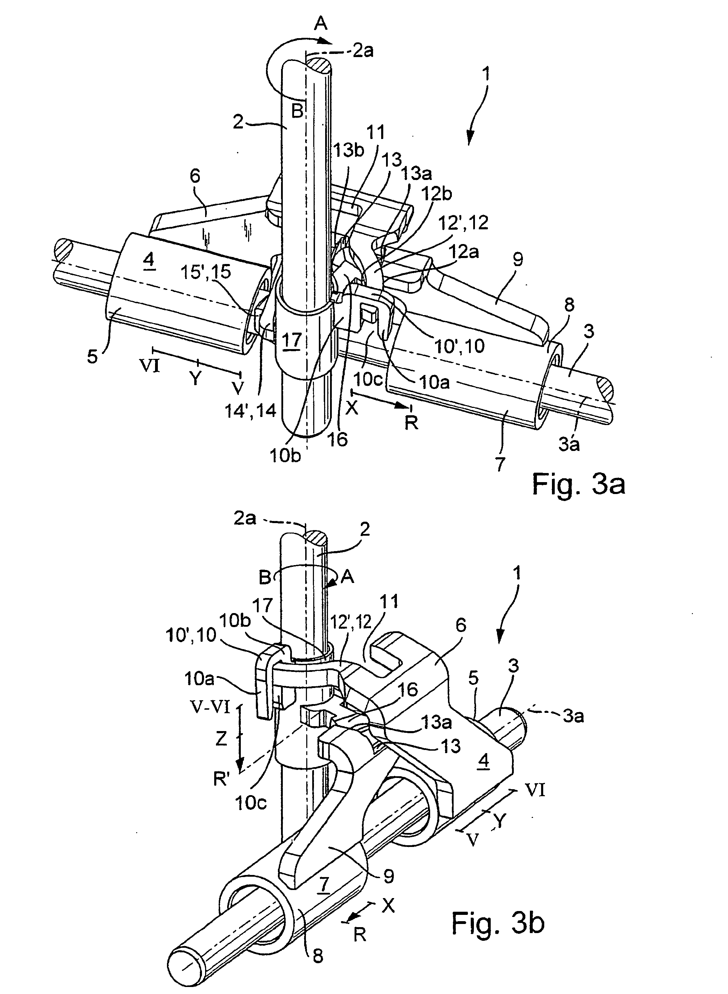

Das Schaltelement 7', zum Schalten des Rückwärtsganges, besteht aus der Schaltgabel 7, einem Schaltarm 9 sowie einer Schiebehülse 8 und sitzt mittels der Schiebehülse 8 verschiebbar auf der Schaltschiene 3. Wie aus den Figuren 2a und 3b ersichtlich ist, sind die Schaltarme 6 und 9 jeweils mit einem Schaltmaul 11 bzw. 13 für den Eingriff eines Schaltfingers 16 versehen. Von dem Schaltmaul 11 erstreckt sich ein Sperrelement 12', ausgebildet als ein Sperrbogen 12 und von dem Schaltmaul 13 ein Sperrelement 14', ebenfalls ausgebildet als ein Sperrbogen 14, in Richtung der Schaltwelle 2. Der Schaltfinger 16 ist zusammen mit Sperrgliedern 10' und 15' mittels einer Nabe 17 an der Schaltwelle befestigt. Die Sperrglieder 10' und 15' sind erfindungsgemäß die Bügel 10 und 15.

Im Nachfolgenden wird anhand der Darstellungen der Figuren 2a bis 4c die Funktion der Schaltvorrichtung 1 näher beschrieben, wobei die Schaltvorrichtung 1 ohne die Schaltgabeln 4, 7 in den unterschiedlichsten Wähl-, Schalt- bzw. Sperrpositionen und in unterschiedlichen Ansichten dargestellt ist.

Die Figuren 2a und 2b zeigen die Schaltvorrichtung 1, bei der der Schaltfinger 16 durch ein Verschieben der Schaltwelle 2 entlang ihrer Schwenkachse 2a wahlweise in Pfeilrichtung der nach Figur 2a senkrecht im Bild stehenden Doppelpfeile in eine Position Z gebracht ist, aus der sich keiner der Gänge V, VI oder der Rückwärtsgang schalten lassen. Der Schaltfinger 16 steht dazu mit der Schaltwelle 2 um die Schwenkachse 2a in dem gesamten Schwenkbereich A-B der Schaltwelle 2 frei schwenkbar im Bild unter dem Schaltarm 6 und über dem Schaltarm 9. Aus dieser Position Z ist mit der Schaltwelle 2 ein weiteres nicht dargestelltes Schaltelement in der Vorrichtung schaltbar, oder diese Position dient zur Absicherung der Neutralstellung in der Schaltvorrichtung. Die Gänge V, VI und der Rückwärtsgang sind mittels der Sperrglieder 10' und 15' gegen ungewollte Schaltbewegungen in die mit Pfeilen gekennzeichneten horizontalen Schaltrichtungen V, VI und R gesperrt.

Das gesperrte Schaltelement 7' steht auf der Schaltschiene in der Position X (Figur 2b). Zum Sperren des Rückwärtsganges greift das Sperrglied 15', zumindest wenn das Schaltelement 7' bestrebt ist sich in die Schaltrichtung R zu bewegen, an einem in die Schaltrichtung R weisenden Abschnitt 14a an dem Sperrbogen 14 des Schaltelementes 7' an (Figur 2b). Die Schwenkachse 2a der Schaltwelle 2 liegt dem Abschnitt 14a des Schaltelements 7' in der zu sperrenden Schaltrichtung R gegenüber. Der Bügel 15 ist in dieser Schaltrichtung R zwischen der Schaltwelle 2 und dem Abschnitt 14a angeordnet und einer Schaltbewegung des Schaltelementes 7' in diese Richtung somit im Wege. Dazu liegt der zweischenkelig ausgeführte Bügel 15 mit einer seine Schenkel 15a und 15b verbindenden Verbindung 15c zumindest teilweise an dem Abschnitt 14a oder einem Punkt des Abschnittes 14a an. Die freien Enden der Schenkel 15a und 15b weisen zur Schwenkachse 2a und sind mit der Nabe 17 verschweißt. Der Bügel 15 ist aus dieser Position mit der Schaltwelle 2 und dem Schaltfinger 16 synchron wahlweise in die eine oder die andere Schwenkrichtung A bzw. B um die Schwenkachse 2a schwenkbar und fährt beim Schwenken immer an dem Abschnitt 14a entlang. Der schwenkende Bügel 15 liegt auch schwenkend über dem gesamten Schwenkbereich der Schaltwelle 2 immer zumindest einem in die Schwenkrichtung weisenden Punkt an dem Abschnitt 14a gegenüber.

In der gesperrten Position steht das Schaltelement 4' auf der Schaltschiene in der Position Y (Figur 2b). Zum Sperren des fünften Ganges greift das Sperrglied 10' zumindest wenn das Schaltelement 4' bestrebt ist sich in die Schaltrichtung V zu bewegen, an einem in die Schaltrichtung V weisenden Abschnitt 12a an dem Sperrbügel 12 des Schaltelements 4' an (Figur 2a). Die Schwenkachse 2a der Schaltwelle liegt dem Sperrelement 12' des Schaltelementes 4' an einer von der zu sperrenden Schaltrichtung V abgewandten Seite gegenüber. Der Bügel 10 ist ein den Sperrbogen 12 am Schaltelement 4' zumindest teilweise übergreifender Übergriff. Dazu ist der Bügel 10 zweischenkelig ausgebildet und hintergreift in die Schaltrichtung Y den Sperrbogen 12 mit einem Schenkel 10a und damit das Schaltelement 4'. Zumindest wenn das Schaltelement 4' bestrebt ist sich auf der Schaltschiene 3 in die Schaltrichtung V zu bewegen, liegt der Schenkel 10a an dem Abschnitt 12a oder einem Punkt des Abschnittes 12a an. Der zweite Schenkel 10a des Bügels 10 ist parallel zu dem Schenkel 10a sowie der Schwenkachse 2a ausgerichtet und an der Nabe 17 befestigt. Der Bügel 10 ist aus dieser Position mit der Schaltwelle 2 und dem Schaltfinger 16 synchron wahlweise in die eine oder andere der Schwenkrichtungen A oder B um die Schwenkachse 2a schwenkbar und fährt beim Schwenken immer an dem Abschnitt 12a entlang. Der schwenkende Hebel 10a liegt auch schwenkend immer zumindest einem in die Schaltrichtung 5 weisenden Punkt an dem Abschnitt 12a gegenüber oder an diesem an.

Zum Sperren des sechsten Ganges greift das Sperrglied 10', zumindest wenn das Schaltelement 7' bestrebt ist sich aus der Position Y auf der Schaltschiene in die Schaltrichtung VI zu bewegen, an einem in die Schaltrichtung VI weisenden Abschnitt 12b an dem Sperrelement 12' des Schaltelementes 4' an. Die Schwenkachse 2a der Schaltwelle 2 liegt dem Abschnitt 12b des Schaltelementes in der zu sperrenden Schaltrichtung VI gegenüber. Der zweite Schenkel 10b des Bügels 10 ist in dieser Schaltrichtung VI zwischen der Schaltwelle 2 und dem Abschnitt 12a an dem Sperrbogen 12 angeordnet und einer Schaltbewegung des Schaltelementes 4' in dieser Richtung somit im Wege. Der Schenkel 10b ist aus dieser Position mit der Schaltwelle 2 und dem Schaltfinger 16 synchron wahlweise in die eine oder andere der Schwenkrichtungen A oder B um die Schwenkachse 2a schwenkbar und fährt beim Schwenken immer an dem Sperrbogen 12 entlang. Der schwenkende Schenkel 10b liegt auch schwenkend immer zumindest einem in die Schaltrichtung VI weisenden Punkt an dem Abschnitt 12b gegenüber oder an diesem an.

Die Figuren 3a und 3b zeigen die Schaltvorrichtung 1 in einer Position, in der der Rückwärtsgang R geschaltet ist. Zum Einnehmen dieser Position ist der Schaltfinger 16 zuerst durch Verschieben der Schaltwelle 2 entlang ihrer Schwenkachse 2a in Pfeilrichtung des nach Figur 3b senkrecht im Bild stehenden Doppelpfeiles in die Position R' gebracht. In dieser Position des Schaltfingers 16 steht das Schaltelement 7' in der Position X. Der Schaltfinger 16 greift in das Schaltmaul 13 am Schaltarm 9 des Schaltelementes 7' ein. Bei einer derartigen Verschiebung der Schaltwelle 2 taucht der Sperrbogen 12 tiefer in das Maul 10c des Bügels 10 ein und sperrt somit weiterhin, wie vorher beschrieben, den fünften und sechsten Gang während des Schaltens und bei geschaltetem Rückwärtsgang. Der Bügel 15 folgt der Verschiebebewegung der Schaltwelle 2 aus seiner Sperrstellung in die Richtung R, bis er sich von dem Abschnitt 14a des Sperrbogens 14 löst und das Schaltelement 7' für eine Bewegung in die Schaltrichtung R freigibt. Anschließend wird die Schaltwelle 2 in die Schwenkrichtung A geschwenkt. Beim Schwenken der Schaltwelle 2 in die Schwenkrichtung A bewegt sich der Schaltfinger 16 gegen die Innenflanke 13a des Schaltmaules 13 und zwingt das Schaltelement 7' über den Schaltarm 9 aus der Position X in die Schaltstellung R. Der Sperrbogen 14 und damit das Schaltelement 7' bewegen sich entlang der Längsachse 3a ungehindert auf die Schaltwelle 2 zu, bis der Rückwärtsgang R eingelegt ist. Der Sperrbogen 14 übernimmt die Funktion eines Anschlages an der Nabe 17, die die exakte Lage des Schaltelementes 7' in die zu schaltende Position R absichert. Bei einem Gangwechsel oder einem Wechsel in die Neutralstellung der Schaltvorrichtung 1 und damit beim Herausnehmen des Rückwärtsganges schwenkt die Schaltwelle 2 in die Schwenkrichtung B. Der Schaltfinger 16 bewegt sich gegen die Innenflanke 13b des Schaltmaules 13 und verschiebt das Element 7' auf der Schaltschiene 3 in die Position X zurück.

Der Bügel 15 ist beim Wählen und Schalten des Rückwärtsganges und in der Schaltstellung R im gesamten Schwenkbereich A-B mit der Schaltwelle 2 und dem Schaltfinger 16 synchron wahlweise in die eine oder andere der Schwenkrichtungen A oder B um die Schwenkachse 2a frei und ungehindert im Bild unter dem Sperrbogen 14 hindurch schwenkbar, ohne dass er beim Schwenken den Sperrbogen 14 behindert. Der Bügel 10 ist mit der Schaltwelle 2 und dem Schaltfinger 16 synchron wahlweise in die eine oder andere der Schwenkrichtungen A oder B um die Schwenkachse 2a schwenkbar und fährt beim Schwenken mit dem Schenkel 10a immer an dem Abschnitt 12a und mit dem Schenkel 10b immer an dem Abschnitt 12b entlang. Die schwenkenden Schenkel 10a und 10b liegen auch schwenkend immer zumindest einem in die Schaltrichtung V bzw. VI weisenden Punkt an dem Abschnitt 12a bzw. 12b gegenüber oder liegen an diesem an und sperren beim Wählen und Schalten des Rückwärtsganges und in der Schaltstellung R den fünften und sechsten Gang in der Position Y.

Figur 4a zeigt den Schaltfinger 16 in einer Position, in der die Gasse V-VI zum wahlweisen Schalten des fünften oder sechsten Ganges gewählt ist. Zum Einnehmen dieser Position ist der Schaltfinger 16 zuerst durch Verschieben der Schaltwelle entlang ihrer Schwenkachse 2a in Pfeilrichtung des nach Figur 3b senkrecht im Bild stehende Doppelpfeiles in die Position V-VI gebracht, in der das Schaltelement 4' in der Position Y steht. Der Schaltfinger 16 greift in das Schaltmaul 11 des Schaltelementes 4' ein. Bei der Bewegung der Schaltwelle 2 in diese Position folgt zwar der Bügel 15 der Verschiebung der Schaltwelle 2, bleibt aber in die Schaltrichtung R gesehen in dem Bewegungsraum des Sperrstückes 14 und sperrt somit weiterhin, wie schon beschrieben, das Schaltelement 7' in der Position X während der fünfte bzw. sechste Gang eingelegt wird sowie bei geschaltetem fünftem bzw. sechstem Gang. Der Bügel 10 folgt der Verschiebebewegung der Schaltwelle 2 zum Wählen der Gasse V-VI aus seiner Sperrstellung in die Richtung V-VI, bis sich seine Schenkel 10a und 10b von dem Abschnitt 12a und 12b des Sperrstückes 12 lösen und das Schaltelement 4' für ein Verschieben in die Schaltrichtung V und VI freigeben. Anschließend wird die Schaltwelle 2 wahlweise in die Schwenkrichtung A oder B geschwenkt und dabei der fünfte oder sechste Gang geschaltet.

In der Darstellung nach Figur 4b steht die Schaltvorrichtung 1 in einer Position, in der der fünfte Gang geschaltet ist. Zum Einnehmen dieser Position ist der Schaltfinger 16 in die Schwenkrichtung A geschwenkt. Beim Schwenken der Schaltwelle 2 in die Schwenkrichtung A bewegt sich der Schaltfinger 16 gegen die Innenflanke 11a des Schaltmaules 11 und zwingt das Schaltelement 4' über den Schaltarm 6 aus der Position Y in die Schaltstellung V. Der Sperrbogen 12 und damit das Schaltelement 4' bewegen sich ungehindert von der Schaltwelle 2 weg, bis der fünfte Gang eingelegt ist. Bei einem Gangwechsel oder einem Wechsel des Schaltelementes 4' in die Position Y sowie darüber hinaus in die Schaltstellung VI und damit beim Herausnehmen des fünften Ganges schwenkt die Schaltwelle 2 in die Schwenkrichtung B. Der Schaltfinger 16 bewegt sich gegen die Innenflanke 11b des Schaltmaules 11 und verschiebt das Schaltelement 4' auf der Schaltschiene 3 in die Position Y zurück oder in die Position VI.

Figur 4c zeigt das Schaltelement 4' in einer Position, in der der sechste Gang geschaltet ist. Zum Einnehmen dieser Position ist der Schaltfinger 16 in die Schwenkrichtung B geschwenkt. Beim Schwenken der Schaltwelle 2 in die Schwenkrichtung B bewegt sich der Schaltfinger 16 gegen die Innenflanke 11b des Schaltmaules 11 und zwingt das Schaltelement 4' über den Schaltarm 6 aus der Position Y in die Schaltstellung V. Der Sperrbogen 12 und damit das Schaltelement 4' bewegen sich ungehindert auf die Schaltwelle 2 zu, bis der sechste Gang eingelegt ist. Bei einem Gangwechsel oder einem Wechsel des Schaltelementes 4' in die Position Y sowie darüber hinaus in die Schaltstellung V und damit beim Herausnehmen des sechsten Ganges, schwenkt die Schaltwelle in die Schwenkrichtung A. Der Schaltfinger 16 bewegt sich gegen die Innenflanke 11a des Schaltmaules 11 und verschiebt das Schaltelement 4' auf der Schaltschiene 3 in die Position Y zurück oder darüber hinaus in die Position V.

Der Bügel 10 ist beim Wählen und Schalten des fünften bzw. sechsten Ganges und in der Schaltstellung V bzw. VI im gesamten Schwenkbereich A-B mit der Schaltwelle 2 sowie mit dem Schaltfinger 16 synchron wahlweise in die eine oder die andere der Schwenkrichtungen A oder B um die Schwenkachse 2 frei und ungehindert über dem Sperrbogen 12 schwenkbar, ohne beim Schwenken den Sperrbogen 12 und damit das Schaltelement 4' zu behindern. Der Bügel 15 ist mit der Schaltwelle 2 und dem Schaltfinger 16 synchron wahlweise in die eine oder andere der Schwenkrichtungen A oder B um die Schwenkachse 2 schwenkbar und fährt beim Schwenken mit der Verbindung 15c immer an dem Abschnitt 14a entlang. Die Verbindung 15c liegt auch schwenkend immer zumindest einem in die Schaltrichtung R weisenden Punkt an dem Abschnitt 14a zwischen der Schaltwelle 2 und dem Sperrbogen 14 gegenüber oder liegt an diesem an. Somit sperrt der Bügel 15 beim Wählen und Schalten des fünften bzw. sechsten Ganges und in der Schaltstellung V bzw. VI den Rückwärtsgang in der Position R.

### Bezugszeichen

- 1: Schaltvorrichtung
- 2: Schaltwelle
- 2a: Schwenkachse
- 3: Schaltschiene
- 3a: Längsachse
- 4: Schaltgabel
- 4': Schaltelement
- 5: Schiebehülse
- 6: Schaltarm
- 7: Schaltgabel
- 7': Schaltelement
- 8: Schiebehülse
- 9: Schaltarm
- 10: Bügel
- 10a: Schenkel
- 10b: Schenkel
- 10c: Maul
- 10': Sperrglied
- 11: Schaltmaul
- 11a: Innenflanke
- 11b: Innenflanke
- 12: Sperrbogen
- 12': Sperrelement
- 12a: Abschnitt
- 12b: Abschnitt
- 13: Schaltmaul
- 13a: Innenflanke
- 13b: Innenflanke
- 14: Sperrbogen
- 14': Sperrelement
- 14a: Abschnitt
- 15: Bügel
- 15a: Schenkel
- 15b: Schenkel
- 15c: Verbindung
- 15': Sperrglied
- 16: Schaltfinger
- 17: Nabe

## Patentansprüche

1. Schaltvorrichtung (1) zum Schalten von wenigstens zwei über bewegbare Schaltelemente (4', 7') schaltbaren Gängen eines Schaltgetriebes mit wenigstens einem um eine Schwenkachse (2a) schwenkbaren sowie entlang der Schwenkachse (2a) verschiebbaren Schaltfinger (16), wobei die Schaltvorrichtung (1) mit Sperrgliedern (10',15') versehen ist, die synchron mit dem Schaltfinger (16) um die Schwenkachse (2a) schwenkbar sowie entlang der Schwenkachse (2a) verschiebbar sind, die wahlweise das Schalten mindestens eines der Gänge an einem Schaltelement (4', 7') sperren, wobei die Sperrglieder (10', 15') das jeweils zu sperrende Schaltelement (4', 7') an einem in die zu sperrende Schaltrichtung weisenden Abschnitt (12a, 12b, 14a) des Schaltelementes (4', 7') zumindest dann angreifen, wenn das zu sperrende Schaltelement (4', 7') bestrebt ist, sich in die gesperrte Schaltrichtung zu bewegen, **dadurch gekennzeichnet, dass** zwei Sperrglieder (10',15') vorgesehen und die Sperrglieder (10', 15') als Bügel (10, 15) ausgebildet sind , wobei mindestens ein Teilabschnitt jedes Bügels (10, 15) um die Schwenkachse (2a) schwenkbar zumindest einem in die Schaltrichtung weisenden Punkt der Oberfläche des Abschnittes (12a, 12b, 14a) in der zu sperrenden Schaltrichtung gegenüberliegt, wobei das eine Sperrglied (10') ein das erste Schaltelement (4') zumindest teilweise übergreifender sowie den Abschnitt (12a) des ersten Schaltelements (4') in Schaltrichtung wenigstens teilweise hintergreifender sowie in die Schaltrichtung unbeweglicher Übergriff ist, und dass der Abschnitt (14a) des zweiten Schaltelements (7') in der Sperrstellung an dem weiteren Sperrglied (15') anliegt.

2. Schaltvorrichtung nach Anspruch 1, **dadurch gekennzeichnet, dass** das Sperrglied (10') ein das Schaltelement (4') zumindest teilweise übergreifender sowie den Abschnitt (12a) wenigstens teilweise in die Schaltrichtung hintergreifender Schenkel (10a) eines zweischenkeligen Bügels (10) ist.

3. Schaltvorrichtung nach Anspruch 1, **dadurch gekennzeichnet, dass** der Bügel (15) zweischenkelig ausgebildet ist und mit den freien Enden seiner Schenkel (15a, 15b) zur Schwenkachse (2a) weist, wobei der Bügel (15) mit einem von der Schwenkachse (2a) weggewandten Teilabschnitt einer zur Schwenkachse (2a) ausgerichteten Verbindung (15c) seiner Schenkel (15a, 15b) zumindest teilweise an dem Abschnitt (14a) anliegt.

4. Schaltvorrichtung nach Anspruch 1, , **dadurch gekennzeichnet, dass** die Schaltvorrichtung (1) eine Schaltwelle (2) aufweist, wobei die Längsmittelachse der Schaltwelle (2) die Schwenkachse (2a) ist und dass die Bügel (10, 15) um die Längsmittelachse schwenkbar an der Schaltwelle (2) befestigt sind.

5. Schaltvorrichtung nach Anspruch 1, **dadurch gekennzeichnet, dass** das Schaltelement (4', 7') eine Schaltgabel (4, 7) für das Schalten zumindestens eines Ganges aufweist.

6. Schaltvorrichtung nach Anspruch 1, mit wenigstens einem zum wahlweisen Schalten von zwei Gängen in zwei Schaltrichtungen bewegbaren Schaltelement (7'), **dadurch gekennzeichnet, dass** das Schaltelement (7') eine Schaltgabel (7) für das Schalten von zwei Gängen aufweist.

7. Schaltvorrichtung nach Anspruch 1, **dadurch gekennzeichnet, dass** das Schaltelement (7') zum wahlweisen Schalten von zwei Gängen in zwei Schaltrichtungen bewegbar ist und mittels des Sperrgliedes (15') in beide Schaltrichtungen unbeweglich sperrbar ist, wobei das Sperrglied (15') ein das Schaltelement (7') zumindest teilweise übergreifender sowie den jeweiligen in Schaltrichtung weisenden Abschnitt (14a) mit jeweils einem Schenkel (15a, 15b) wenigstens teilweise in Schaltrichtung hintergreifender zweischenkeliger Bügel (15) ist.

8. Schaltvorrichtung nach Anspruch 1, **dadurch gekennzeichnet, dass** das erste Schaltelement (4') zum wahlweisen Schalten von zwei Gängen in zwei Schaltrichtungen bewegbar und mittels eines ersten Sperrgliedes (10') in beide Schaltrichtungen unbeweglich sperrbar ist, wobei das Sperrglied (10') ein das Schaltelement (4') zumindest teilweise übergreifender sowie den jeweiligen in Schaltrichtung weisenden Abschnitt (12a, 12b) mit jeweils einem Schenkel (10a, 10b) wenigstens teilweise in Schaltrichtung hintergreifender zweischenkeliger Bügel (10) ist und dass das in wenigstens eine Schaltrichtung bewegbare zweite Schaltelement (7') zum Schalten wenigstens eines dritten Ganges mittels eines zweiten Sperrgliedes (15') in eine Schaltrichtung unbeweglich sperrbar ist, wobei das zweite Sperrglied (15') ein zweischenkelig ausgebildeter Bügel (15) ist und mit den freien Enden seiner Schenkel (15a, 15b) zur Schwenkachse (2a) weist und wobei der Bügel (15) mit seiner von der Schwenkachse (2a) weg gewandten Seite der Verbindung (15c) seiner Schenkel (15a, 15b) an dem Abschnitt des zweiten Schaltelementes (7') anliegt.

9. Schaltvorrichtung nach Anspruch 8, **dadurch gekennzeichnet, dass** die Schaltvorrichtung (1) eine Schaltwelle (2) aufweist, wobei die Längsmittelachse der Schaltwelle (2) die Schwenkachse (2a) ist und dass die Bügel (10, 15) um die Längsmittelachse schwenkbar an der Schaltwelle (2) befestigt sind.

10. Schaltvorrichtung nach Anspruch 1, 2 oder 3, **dadurch gekennzeichnet, dass** der Bügel (10, 15) ein Stanzteil aus Stahl ist.

## Claims

1. Selector device (1) for selecting at least two gears of a change-speed gearbox which can be selected via movable selector elements (4', 7'), having at least one selector finger (16) which can be pivoted about a pivot axis (2a) and can be displaced along the pivot axis (2a), the selector device (1) being provided with locking members (10', 15') which can be pivoted about the pivot axis (2a) and displaced along the pivot axis (2a) synchronously with the selector finger (16) and which optionally lock the selecting of at least one of the gears on a selector element (4', 7'), the locking members (10', 15') acting on the respective selector element (4', 7') which is to be locked on a section (12a, 12b, 14a), pointing in the selecting direction which is to be locked, of the selector element (4', 7') at least when the selector element (4', 7') which is to be locked is attempting to move in the locked selecting direction, **characterized in that** two locking members (10', 15') are provided and the locking members (10', 15') are configured as shackles (10, 15), at least one partial section of each shackle (10, 15) lying opposite at least one point, which points in the selecting direction, of the surface of the section (12a, 12b, 14a) in the selecting direction which is to be locked, so as to be pivotable about the pivot axis (2a), one locking member (10') being an engaging-over means which engages over the first selector element (4') at least partially, engages behind the section (12a) of the first selector element (4') in the selecting direction at least partially and cannot be moved in the selecting direction, and **in that** the section (14a) of the second selector element (7') is in contact with the further locking member (15') in the locking position.

2. Selector device according to Claim 1, **characterized in that** the locking member (10') is a limb (10a) of a two-limbed shackle (10) which engages over the selector element (4') at least partially and engages behind the section (12a) at least partially in the selecting direction.

3. Selector device according to Claim 1, **characterized in that** the shackle (15) is of two-limbed configuration and points towards the pivot axis (2a) with the free ends of its limbs (15a, 15b), the shackle (15) being in contact at least partially with the section (14a) by way of a partial section, facing away from the pivot axis (2a), of a connection (15c), oriented with respect to the pivot axis (2a), of its limbs (15a, 15b).

4. Selector device according to Claim 1, **characterized in that** the selector device (1) has a selector shaft (2), the longitudinal centre axis of the selector shaft (2) being the pivot axis (2a), and **in that** the shackles (10, 15) are fastened to the selector shaft (2) so as to pivot about the longitudinal centre axis.

5. Selector device according to Claim 1, **characterized in that** the selector element (4', 7') has a selector fork (4, 7) for selecting at least one gear.

6. Selector device according to Claim 1, having at least one selector element (7') which can be moved in two selecting directions for the optional selection of two gears, **characterized in that** the selector element (7') has a selector fork (7) for selecting two gears.

7. Selector device according to Claim 1, **characterized in that** the selector element (7') can be moved in two selecting directions for the optional selection of two gears and can be locked by means of the locking member (15') so as not to move in both selecting directions, the locking member (15') being a two-limbed shackle (15) which engages over the selector element (7') at least partially and engages behind the respective section (14a), which points in the selecting direction, with in each case one limb (15a, 15b) at least partially in the selecting direction.

8. Selecting device according to Claim 1, **characterized in that** the first selector element (4') can be moved in two selecting directions for optionally selecting two gears and can be locked by means of a first locking member (10') so as not to move in both selecting directions, the locking member (10') being a two-limbed shackle (10) which engages over the selector element (4') at least partially and engages behind the respective section (12a, 12b), which points in the selecting direction, with in each case one limb (10a, 10b) at least partially in the selecting direction, and **in that** the second selector element (7'), which can be moved in at least one selecting direction, for selecting at least one third gear can be locked by means of a second locking member (15') so as not to move in a selecting direction, the second locking member (15') being a shackle (15) of two-limbed configuration and pointing towards the pivot axis (2a) with the free ends of its limbs (15a, 15b), and the shackle (15) being in contact with the section of the second selector element (7') by way of its side, facing away from the pivot axis (2a), of the connection (15c) of its limbs (15a, 15b).

9. Selector device according to Claim 8, **characterized in that** the selector device (1) has a selector shaft (2), the longitudinal centre axis of the selector shaft (2) being the pivot axis (2a), and **in that** the shackles (10, 15) are fastened to the selector shaft (2) so as to pivot about the longitudinal centre axis.

10. Selector device according to Claim 1, 2 or 3, **characterized in that** the shackle (10, 15) is a punched part made from steel.

## Revendications

1. Dispositif de changement de vitesse (1) pour passer au moins deux rapports d'une boîte de vitesses pouvant être changés par le biais d'éléments de changement de vitesse (4', 7') comprenant au moins un doigt de changement de vitesse (16) pouvant pivoter autour d'un axe de pivotement (2a) et pouvant coulisser le long de l'axe de pivotement (2a), le dispositif de changement de vitesse (1) étant muni d'éléments de blocage (10', 15') qui peuvent pivoter autour de l'axe de pivotement (2a) et qui peuvent coulisser le long de l'axe de pivotement (2a) de manière synchrone avec le doigt de changement de vitesse (16), lesquels bloquent au choix le passage d'au moins l'une des vitesses au niveau d'un élément de changement de vitesse (4', 7'), les éléments de blocage (10', 15') saisissant au moins l'élément de changement de vitesse (4', 7') qui doit à chaque fois être bloqué au niveau d'une section (12a, 12b, 14a) de l'élément de changement de vitesse (4', 7') orientée dans la direction de changement de vitesse à bloquer lorsque l'élément de changement de vitesse (4', 7') à bloquer est forcé de se déplacer dans la direction de changement de vitesse bloquée, **caractérisé en ce que** deux éléments de blocage (10', 15') sont prévus et les éléments de blocage (10', 15') sont réalisés sous la forme d'étriers (10, 15), au moins une section partielle de chaque étrier (10, 15) pouvant pivoter autour de l'axe de pivotement (2a) étant opposée à au moins un point dirigé dans la direction de changement de vitesse de la surface de la section (12a, 12b, 14a) dans la direction de changement de vitesse à bloquer, l'un des éléments de blocage (10') étant un recouvrement immobile dans la direction de changement de vitesse recouvrant au moins partiellement le premier élément de changement de vitesse (4') et recouvrant par l'arrière la section (12a) du premier élément de changement de vitesse (4') au moins partiellement dans la direction de changement de vitesse, et que la section (14a) du deuxième élément de changement de vitesse (7') en position de blocage repose contre l'autre élément de blocage (15').

2. Dispositif de changement de vitesse selon la revendication 1, **caractérisé en ce que** l'élément de blocage (10') est une branche (10a) d'un étrier à deux branches (10) qui recouvre au moins partiellement l'élément de changement de vitesse (4) et qui recouvre par l'arrière la section (12a) au moins partiellement dans la direction de changement de vitesse.

3. Dispositif de changement de vitesse selon la revendication 1, **caractérisé en ce que** l'étrier (15) présente une configuration à deux branches et les extrémités libres de ses branches (15a, 15b) sont dirigées vers l'axe de pivotement (2a), l'étrier (15) reposant au moins partiellement sur la section (14a) avec une section partielle opposée à l'axe de pivotement (2a) d'une liaison (15c) de ses branches (15a, 15b) dirigée vers l'axe de pivotement (2a).

4. Dispositif de changement de vitesse selon la revendication 1, **caractérisé en ce que** le dispositif de changement de vitesse (1) présente un arbre de changement de vitesse (2), l'axe central longitudinal de l'arbre de changement de vitesse (2) étant l'axe de pivotement (2a) et que les étriers (10, 15) sont fixés sur l'arbre de changement de vitesse (2) de manière à pouvoir pivoter autour de l'axe central longitudinal.

5. Dispositif de changement de vitesse selon la revendication 1, **caractérisé en ce que** l'élément de changement de vitesse (4', 7') présente une fourche de changement de vitesse (4, 7) pour le passage d'au moins un rapport.

6. Dispositif de changement de vitesse selon la revendication 1, comprenant au moins un élément de changement de vitesse (7') pouvant être déplacé dans deux directions de changement de vitesse pour passer deux rapports au choix, **caractérisé en ce que** l'élément de changement de vitesse (7') présente une fourche de changement de vitesse (7) pour passer deux rapports.

7. Dispositif de changement de vitesse selon la revendication 1, **caractérisé en ce que** l'élément de changement de vitesse (7') peut être déplacé dans deux directions de changement de vitesse pour passer deux rapports au choix et qu'il peut être bloqué au moyen de l'élément de blocage (15') de manière à être immobilisé dans les deux directions de changement de vitesse, l'élément de blocage (15') étant un étrier à deux branches (15) qui recouvre au moins partiellement l'élément de changement de vitesse (7') et qui recouvre par l'arrière la section (14a) à chaque fois dirigée dans la direction de changement de vitesse, au moins partiellement à chaque fois avec une branche (15a, 15b) dans la direction de changement de vitesse.

8. Dispositif de changement de vitesse selon la revendication 1, **caractérisé en ce que** le premier élément de changement de vitesse (4') peut être déplacé dans deux directions de changement de vitesse pour passer deux rapports au choix et il peut être bloqué au moyen d'un premier élément de blocage (10') de manière à être immobilisé dans les deux directions de changement de vitesse, l'élément de blocage (10') étant un étrier à deux branches (10) qui recouvre au moins partiellement l'élément de changement de vitesse (4') et qui recouvre par l'arrière la section (12a, 12b) à chaque fois dirigée dans la direction de changement de vitesse au moins partiellement à chaque fois avec une branche (10a, 10b) dans la direction de changement de vitesse et que le deuxième élément de changement de vitesse (7') qui peut être déplacé dans au moins une direction de changement de vitesse pour passer au moins un troisième rapport peut être bloqué au moyen d'un deuxième élément de blocage (15') de manière à être immobilisé dans une direction de changement de vitesse, le deuxième élément de blocage (15') étant un étrier à deux branches (15) dont les extrémités libres de ses branches (15a, 15b) sont dirigées vers l'axe de pivotement (2a) et l'étrier (15) reposant sur la section du deuxième élément de changement de vitesse (7') avec le côté opposé à l'axe de pivotement (2a) de la liaison (15c) entre ses branches (15a, 15b).

9. Dispositif de changement de vitesse selon la revendication 8, **caractérisé en ce que** le dispositif de changement de vitesse (1) présente un arbre de changement de vitesse (2), l'axe central longitudinal de l'arbre de changement de vitesse (2) étant l'axe de pivotement (2a) et que les étriers (10, 15) sont fixés sur l'arbre de changement de vitesse (2) de manière à pouvoir pivoter autour de l'axe central longitudinal.

10. Dispositif de changement de vitesse selon la revendication 1, 2 ou 3, **caractérisé en ce que** l'étrier (10, 15) est une pièce découpée en acier.
